# EUROPEAN PATENT APPLICATION

(11) **EP 2 669 630 A1**
(43) Date of publication of application: **04.12.2013**
(21) Application number: 12170502.4
(22) Date of filing: 01.06.2012
(51) Int. Cl.: G01C 21/20, G05D 1/02

(54) **Method and system for determination of a route for a ship**

(71) Applicant: ABB Technology AG, 8050 Zürich (CH)
(72) Inventor: Lepistö, Mikko, 00980 Helsinki (FI); Tervo, Kalevi, 00980 Helsinki (FI)
(74) Representative: Söderman, Lisbeth Karin

(57) **Abstract**

The invention is concerned with a computer-implemented method for determination of a route for a ship. The method comprises the steps of defining one or more performance variables of the ship and dynamic input parameters that affect to the performance variable. Information of ship operation and measurement results from sensors during the operation of the ship are obtained and a set of dynamic input parameters is produced. A model for simulating the performance of a ship is created by defining one or more relationships between the performance variables and the dynamic input parameters. One or more of said performance variables is chosen to be optimized in the model for determination of a route for the ship. Simulation results are calculated for the ship performance by using new measurement results for producing a set of new input parameters to be used in the model and using one or more selected performance variable the value of which is dependent on route. A route is found for which the simulation result of the ship performance fulfills one or more criteria set for the selected performance variable. The optimization results are continuously updated along with receiving new input data for determination of a route having better conformity with set criteria for the optimization result. The invention is also concerned with a system and a computer program for performing such a method.

## Description

### TECHNICAL FIELD

The invention is concerned with a method and system and a computer program for optimization of a route for a ship.

### BACKGROUND

In a seagoing vessel, fuel, like oil or sometimes natural gas, is used as an energy source and a diesel engine is used as a main engine. In a large marine vessel, there may be several diesel engines that rotate generators or main propellers of the vessel. The fuel is delivered to the marine vessel in the harbors or during the voyage by fuel tankers. There might also be different kinds of fuels available and several diesel engines that are driven in parallel and simultaneously.

The power production and propulsion system has been targets for continuous adjustment, control and monitoring in order to achieve optimal efficiency. The power control is a fundamental part of the control system of a ship. Likewise, the propulsion system is controlled to produce the required power by using the available electric and/or primary energy. In practice, however, the sufficiency of energy has not been as critical as the efficiency of the devices and their control systems.

By controlling the power of the separate devices on board, energy can be consumed efficiently and economically. This applies e.g. for individual propulsion units, pumping devices, lighting and heating equipments and other auxiliary devices.

A lot of factors affect the overall energy efficiency of the marine vessel and should be taken into consideration in the optimization and configuration of the power plant of the ship, choice of fuel type, the trim and list of the ship and the planned route.

Current solutions for route optimization are usually based on simple hull and wind resistance models.

A more advanced solution is presented by US patent 7,774,107, which presents a method for guiding a mobile platform, like a ship, by means of a navigation control module and a method for the simulation of predicted conditions, like weather forecasts, along a route so that possible conditions encountered could be taken into consideration.

The solution of JP patent document 62279195 involves a steering control and a main engine control to be integrated by a navigation program control device which plans a course obtaining the maximum saving of energy from weather, ocean weather, sea chart information and propulsive performance.

WO publication 2008/096376 presents a route selection method in dependence on a predetermined energy usage model and received environmental conditions.

The object of this invention is to develop a multifunctional and multiobjective method for route optimization.

### TERMS USED IN THE APPLICATION

The following terms are used in the application text

TRIM: The floating inclination of the ship in the longitudinal (pitch) direction, i.e. the difference between the sinkage of the fore and aft of the ship.

LIST: The floating inclination of the ship in the transversal (roll) direction.

DRAFT: The midship sinkage of the ship.

FLOATING POSITION: Trim, draft or list or any combination of trim, draft and list. The floating position affects the displacement, wet surface and the water resistance of the ship.

POWER PLANT CONFIGURATION: The sharing/distribution of the load between different power generation and consuming devices (like diesel generators, shaft generators, waste heat recovery systems, etc.).

OPTIMAL POWER PLANT CONFIGURATION: The distribution of load between different power generation and consumingdevices that fulfills the optimization criteria such as fuel consumption, emissions, etc.

SHIP BEHAVIOUR/SHIP PERFORMANCE: Describes the actual function of the ship including e.g. the movement, energy consumption, fuel consumption, and emissions of the ship.

SHIP OPERATION: Describes the maneuvering and steering and control actions of the ship in order to drive the engines and electrical devices and move the ship.

VESSEL used synonymously with SHIP

SEA STATE: The state of the sea determined by the wave height, wave period, wave direction, swell, wind-induced waves, etc.

### SUMMARY OF THE INVENTION

The computer-implemented method of the invention for determination of a route for a ship, comprises the steps of defining one or more performance variables of the ship and dynamic input parameters that affect to the performance variable. Information of ship operation and measurement results from sensors during the operation of the ship are obtained and a set of dynamic input parameters is produced. A model for simulating the performance of a ship is created by defining one or more relationships between the performance variables and the dynamic input parameters. One or more of said performance variables is chosen to be optimized in the model for determination of a route for the ship. Simulation results are calculated for the ship performance by using new measurement results for producing a set of new input parameters to be used in the model and using one or more selected performance variable the value of which is dependent on route. A route is found for which the simulation result of the ship performance fulfills one or more criteria set for the selected performance variable. The optimization results are continuously updated along with receiving new input data for determination of a route having better conformity with set criteria for the optimization result.

The system of the invention in a ship for route optimization comprises a processor unit with a model that simulates the performance of a ship by defining one or more relationships between performance variables and dynamic input parameters that affect to the performance variable. The model has means for obtaining information of ship operation and measurement results from sensors during the operation of the ship, and for continuously updating the simulation results along with receiving new input data in order to find a route with better conformity with set performance criteria for the optimization result. A calculation unit also comprised in the system has means for optimizing different routes with respect to one or more selected performance variables. Furthermore the calculation unit has means for determination of a route, the simulation result of which is optimized for a desired performance variable. The system also comprises sensors with means for sending signals describing measurements results to the model.

The Computer program product of the invention is run in a processor unit in a ship, consisting of a model that simulates the performance of a ship. The model defines relationships between variables relating to the performance of a ship and parameters presenting dynamic input parameters that said variables depend on. The computer program product performs the steps of obtaining information of ship operation and measurement results from sensors during the operation of the ship for producing a set of dynamic input parameters, selecting one or more of said performance variables to be optimized in the model for determination of a route for the ship, calculating simulation results for the ship performance whereby the dynamic input parameters to be used in the calculation are based on new measurement results and said one or more selected performance variable is based on different routes, finding a route for which the simulation result of the ship performance fulfills one or more criteria set for the selected performance variable" and continuously updating the simulation results along with receiving new input data in order to find a route with better conformity with set performance criteria for the optimization result.

The functions of the calculation unit and the model are handled by the processor unit either by one single computer program or more programs. In one embodiment, the method steps are performed by two programs, whereby the simulation is performed by one program and the optimization by another program.

The preferable embodiments of the invention have the characteristics of the subclaims.

The route is preferably updated as a result of the updated simulation results. The method might involve a step, wherein several route candidates are defined on the basis of the simulation results that fulfils optimization criteria for chosen performance variables, whereby the determination of a performed route is performed by selecting one of the route candidates. In practice, the selected route that is determined minimizes the value for at least one chosen performance variable, such as fuel or energy consumption.

The invention makes it possible to perform such control actions (for e.g. speed or direction) for each moment that lead to an optimized solution on the basis of the model but also on the basis of some restrictions. The method of the invention gives both the control actions and the route. Timing of different processes, like e.g. water production etc. can then be optimized thereafter or simultaneously.

The optimization system uses a vessel model (or ship model), which is based on full scale onboard measurements for obtaining data of the dynamic input parameters by means of sensor signals. A measuring system can be used to provide the inputs. The model can be trained based on onboard data of the above measurements using self-learning algorithms which are able to capture the relationships between the performance variables, such as the vessel propulsion power consumption, and the input parameters.

In some embodiments, the variables and the parameters as well as their relationships can be changed based on a number of measurement data during a training period and during the operational period. Said changes and the transition between said training period and said operational period are determined by the implemented method with or without interaction of a human.

The invention provides a way to find the most optimum route between a start point and an end point that optimizes selected criteria by using a ship model that is based on real measurement data that is used as input. In this way, a route for a ship can be determined better and more accurate with respect to fulfilling performance criteria than traditional methods do.

When calculating the optimum route, the model takes into account the energy required to move the vessel, as well as the auxiliary energy consumption, which both depend on external operating conditions, and therefore also the chosen route. Operation conditions that affect the ship performance are taken into account in a more versatile way, such as the factor of the energy consumption of auxiliary devices on board. The chosen route and the required propulsion and auxiliary power determine the amount of waste heat that can be used to generate fresh water and steam. The waste heat amount during the voyage can be predicted and the recovery of waste heat optimized with respect to calculating the best time to produce steam, fresh water, etc. The proposed optimization system can therefore if desired optimize also the steam and fresh water production, and other processes that use thermal (or electrical energy generated from thermal energy) using waste heat so that these do not need to be produced with separate oil fired burners or electricity.

The model used in the presented invention optimizes the fuel consumption, the energy consumption, and/or logistics of the material flow when planning the route. Other criteria for optimization might be the speed, time, distance, and vessel motions.

The fuel consumption, vessel motions and voyage is planned in dependence on a large number of data that constitute dynamic input parameters to be fed into the model, such as the vessel characteristics, weather and sea conditions, data of weather, sea currents, sea depths, sea state, ambient temperature, seawater temperature, air humidity, time of day and/or operational conditions such as, the vessel motion, floating position, loading condition, trim, propulsion system, the speed of the ship, fuel costs, efficiency curve, emission values, and/or modes of operation.

The solution of the invention optimizes the voyage route of a vessel or ship by using a full scale model that
(i) is based on real full scale operational data (real measurements)
(ii) adjusts itself as technical conditions of the vessel changes (e.g at a propeller change or when some other such maintenance action takes place)
   takes place or there is an interruption due to service etc.)
(iii) includes prediction models for propulsion system (moving the ship), as well as e.g. the main auxiliary consumers with respect to the operating conditions
(iv) includes a prediction model for fuel consumption as a function of the energy production

In the following, the invention is described by means of some detailed embodiments by means of figures to which the invention is not restricted.

### FIGURES

Figure 1 presents an embodiment of the invention in the form of a block diagram
Figure 2 presents a flow scheme of the invention

### DETAILED DESCRIPTION

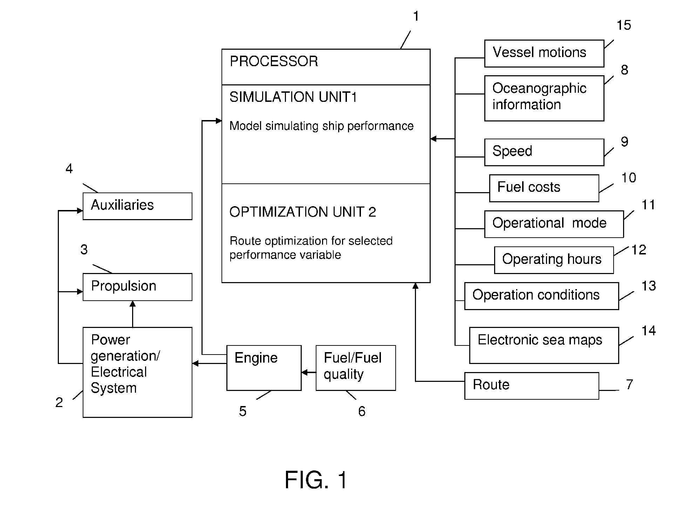

Figure 1 presents an embodiment of the invention in the form of a block diagram. It illustrates the creation of the model of ship performance in accordance with the invention and how the conditions on board are taken into consideration in the creation of the model. The intention is to find a sequence of control actions such as speed and course that leads to a route for the ship from a start point A to an end point B that best fulfills optimization criteria set for the ship performance.

The route has to be within certain criteria, such as optimization criteria to be fulfilled within a tolerance. The route might also have different restrictions relating to e.g. water depth emissions, and time schedules defining with respect to e.g. the arrival time and time windows for points on the way, such as the use of channels (which have to be reserved in advance) etc. There can be different optimization criteria, whereby also different routes are proposed by the optimization.

A simulation model is used for the route determination, which model simulates the performance of the ship and describes the energy consumption, fuel consumption, vessel motions, and ship operation etc. in different external conditions. Thus, the model defines relationships between variables related to the ship during operation (such as energy load and energy distribution) and parameters presenting dynamic input data that said variables depend on.

By using said parameters presenting the dynamic input data, the restrictions and the optimization criteria, one or more routes are found that best fulfill the optimization criteria. In addition to an optimized route, instantaneous target speeds, the operating speed of the propeller and the course of the ship can be obtained in the method of the invention, by means of which the captain can operate the ship.

The route can be updated during the voyage and alternative routes can be suggested along with new input data parameters used to get new simulation results.

The block diagram of figure 1 illustrates input data taken into account in the updating of the simulation results and in the optimization. The figure consists of blocks that represent machines, sensors, control and management units, and data handling units. The arrows from the blocks describe the output of the blocks and the arrows to the block describe the input of the blocks.

### Reference numbers 2, 3 and 4: Input of energy consumption

Energy consuming devices in the vessel are those relating to propulsion energy, whose duty is to move and guide the vessel from the port of departure to the port of destination. Other energy consuming devices are partially independent of the movement of the vessel, such as auxiliary devices for lighting and pumping, apparatus for production and treatment of clean water, waste water treatment, steam production, devices for galley processes, HVAC (Heating, Ventilation and Air Conditioning), etc.

Several variables and parameters related to e.g. the energy consumption of a ship are taken into account in the practical operation of the ship as well as in the distribution of the energy load on different engines and auxiliary devices on board.

The energy consumption is determined not only by the co-action of the different devices but is also affected by external conditions during the operation of the ship, such as weather and sea currents, waves, sea depths, and by operational parameters, such as speed, emission targets, operating hours, and modes of operation like drive in harbour, open sea drive or maneuvering drive, which have different kind of demands.

The power generation/electrical system unit 2 generates the required power for the need of the vessel and creates the propulsion power for the propellers. Thus, the power generation/electrical system unit supplies the energy to the propulsion unit 3 and to all the power consuming devices that are symbolized as the auxiliary unit 4.

In the creating of the simulation model for the ship performance, information from the power generation/electrical system unit 2 will be transferred to the processor unit 1 for creating the model to get all the basic data from load points to available power in order to find a model for the right energy balance on the system. E.g. the number of the generators is decided to produce the required power as efficiently as possible in the simulation model.

### Reference number 7: Input of route information

Route information 7, such as ports data, give available information about the ports from the start point to the destination and of any intermediate points between these points. A route plan, that considers input data and the external forces the marine vessel will face during the voyage from the start point to the end point, can be calculated as well as an estimate for energy consumption to be used in the current operation of the ship. This information is not needed for the simulation but is used in the optimization, wherein information of time schedules and waypoints is needed.

### Reference number 8: Input of information of oceanographic measurements and forecasts

Information of oceanographic measurements and forecasts 8, such as weather forecasts, actual weather information, sea state (like waves), ambient temperature, seawater temperature, air humidity, sea current data, sea depths, and time of day, as well as electronic sea maps 14 giving topographic data are also taken into account in the model.

### Reference number 9: Input of speed data

Speed data is taken into consideration in the creating of the model 9 and the simulation.

### Reference number 11: Input of operational mode

The operational mode 11 consists of data and instructions that define the particulars according to which the marine vessel is operating, like e.g. open sea mode or port mode if these can be predicted in advance.

### Reference number 15: Input of vessel motions

Vessel motions are examples of operational conditions 13 but have here an own reference number.

### Reference number 13: Input of other operational conditions

Other operational conditions 13 include the floating position (like trim, list and draft), and propulsion system information.

### Reference number 12: Input of other operating hours

The operating hours 12 define the duration of the different operational modes and their sequences and can also be used in the initial model.

### Reference number 10: Input of fuel costs

The fuel costs 10 give the fuel types and process to be used.

### Reference number 6: Input of fuel quality

The fuel/fuel quality unit 6 has information of the available fuels and their characteristics having an impact on e.g. the emissions.

### Reference number 5: Input from engine

Furthermore, the simulation model 1 can have input from the engine 5, which input consists of the actual speed/power value, which will change several times during a voyage, for example when the vessel change course or come into shallow waters or sea-current changes. The power per unit is a function of the speed of the vessel. The input from the engine 5 also consists of information of emissions, whereby the emissions of the engine is input to the model in order to compare the emissions with the emissions target set by rules or the authorities and limit the amount of the emissions below the target values.

### Processor 1

### Unit 1 for simulation of ship performance

### Unit 2 for optimization

The functions of simulation and optimization are in this figure handled by two separate calculation units but could be handled by one single unit as well.

Input for the simulation model is continuously given by signals form sensors on board during the operation of the ship for obtaining the above input information. The signals are directly received by a processor unit 1 that creates and updates the model and processes input data.

The obtained signals represent measurement results continuously obtained from sensors during the operation of the ship and are used for producing a set of new dynamic input data to be used in the updating for route optimization. An optimized simulation results for the ship performance is then calculated by using said produced new input data in the simulation model by means of which the route is updated if the results are in better conformity with set optimization criteria than the foregoing results.

The model itself can if desired be improved by redefining the relationships between the performance variables and the dynamic input parameters along with obtaining new information by using learning algorithms in them that are able to continuously recursively or in batch-based redefine the relationships between the variables related to the power consumption, energy balance of energy consuming devices on a ship, the fuel/power consumption, and/or vessel motions and the dynamic input parameters that the variables depend on, the dynamic input parameters being obtained as measurement results from sensors during the operation of the ship. In this way, the model improves itself (i.e. is self-improving or self-learning. In the recursive method the old model is updated only with new data and in the batch-based method the model is just trained again each time and includes both old and new data.

Said new input data is taken into consideration in the route optimization by using the new measurement results input data as given by the sensors and includes the same kind of input data that was used before, i.e. oceanographic information 8 and route data 7, ports data, the speed 9 of the vessel, the operational mode 10 of the vessel, info about operational hours 11, fuel costs 10, operation conditions 13 and the power/speed information and emissions form the engine 5. Of course some input data may not have been changed. The model may have other inputs than mentioned here depending on case and actual conditions. In some embodiments all these inputs mentioned maybe are not used in the model. All variations belong to the scope of this invention.

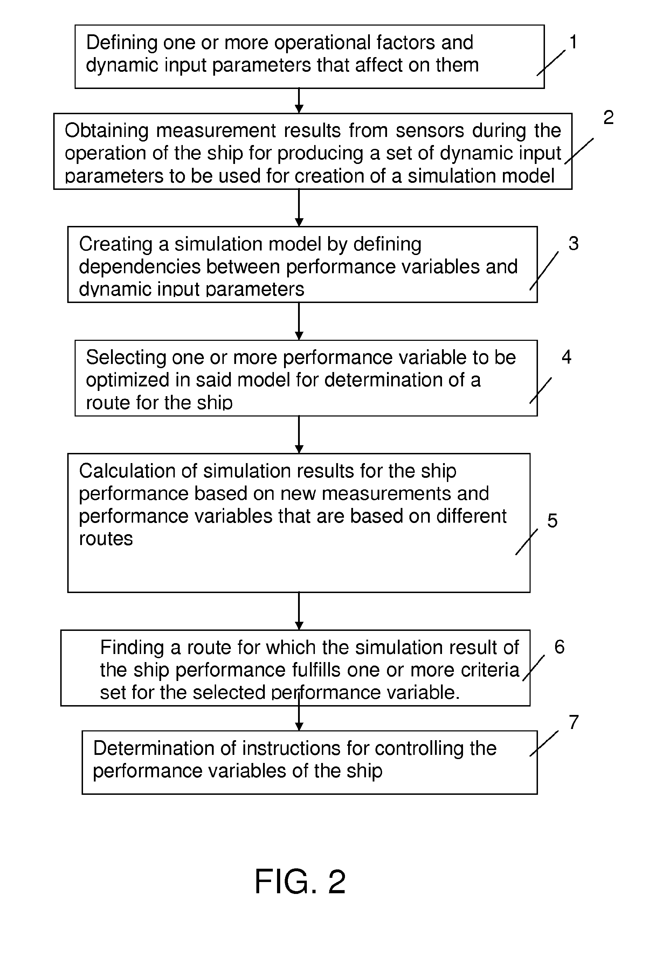

The model created is utilized for route determination with respect to one or more optimized performance variable. This is presented in more detail in figure 2.

Figure 2 presents the invention in the form of a flow scheme.

The invention makes use of a simulation model that describes the performance of a ship for determination a route that is optimized with respect to a given performance variable.

A route that minimizes a given criteria within defined restrictions has to be found. The captain or other person of the ship can be provided with information of not only the optimal route but also with information about the speed to be used on given areas, the course, the operational speed to use, settings of the power plant, propeller pitch etc. The most important factors are about the speed to be used on at a particular time. The user, like the captain, can also get information about adjustments with respect to course, speed, operational speed of propeller and predictions.

The intention is to find a sequence of control actions such as speed and course that leads to a route for the ship from a start point A to an end point B that best fulfills optimization criteria set for the ship performance. The captain gets new information during the voyage and can update and change the route from the initially planned if the system of the invention advises to do so.

In the method of the invention, one or more performance variable and dynamic input parameters that affect to the performance variables are therefore defined in step 1. Possible input parameters were presented in the connection with figure 1, such as weather and sea data, the speed of the ship, fuel costs, information about the operational mode and conditions and the operating hours, as well as information from the engine in the form of energy and fuel consumption data, and information about emissions and target emissions.

The processor unit obtains measurement results from sensors during an operation of a ship in step 2 for producing a set of primary dynamic input parameters to be used for creation of a simulation model. In practice, the measurement results from sensors during an operation of a ship is obtained from one or more prior voyages of the ship or of an a other comparable ship. Alternatively, the set of dynamic input parameters can be produced on the basis of earlier knowledge collected in another way or predictions.

For the creation of a simulation model describing the ship operation, the system of the invention uses in step 3 a learning algorithm that defines dependencies between the primary input parameters and the performance variables such defining a function that describe these dependencies.

One or more performance variables are then selected to be optimized in the model for the determination of a route for the ship in step 4.

The model is then used in step 5 for calculating simulation results for the ship performance, whereby the dynamic input parameters to be used in the calculation are based on new measurement results from sensors and said one or more selected performance variable is based on different routes.

A route is found for which the simulation result of the ship performance fulfills one or more criteria set for the selected performance variable in step 6.

Optionally, in step 7 instructions for controlling the performance variables are determined.

The route can be optimized with respect to any variable or any variables taken into consideration in the model.

## Claims

1. A computer-implemented method for optimization of routes for a ship,
a) defining one or more performance variables of the ship and dynamic input parameters that affect to the performance variable,
b) creating a model for simulating the performance of a ship by defining one or more relationships between the performance variables and the dynamic input parameters,
c) obtaining information of ship operation and measurement results from sensors during the operation of the ship for producing a set of new dynamic input parameters,
d) selecting one or more of said performance variables to be optimized for determination of a route for the ship,
e) using the model for calculating simulation results for the ship performance, whereby the dynamic input parameters to be used in the calculation are based on the measurement results and the value of said one or more selected performance variable is dependent on route,
f) finding a route for which the simulation result of the ship performance fulfills one or more criteria set for the selected performance variable,
g) continuously updating the simulation results during operation along with receiving new measurement results in order to find a route with better conformity with set performance criteria for the optimization result.

2. Method of claim 1, further **characterized by** a step g) wherein the route is updated as a result of step f).

3. Method of claim 1 or 2 , further **characterized in that** the dynamic input parameters that is used for creating the model is based on measurement results from sensors during a real operation of a ship.

4. Method of claim 1, 2 or 3 , further **characterized by** a further step between steps e) and f), wherein several route candidates are proposed on the basis of the simulation results that fulfils different optimization criteria.

5. Method of claim 1, 2 , 3, or 4, further **characterized by** preparing instructions for the operation of the ship

6. Method of claim 1, 2, 3, 4, or 5, **characterized in that** the set performance criteria consists of optimization goals for ship operation to be fulfilled within a tolerance.

7. Method of claim 1, 2 ,3, 4, 5, or 6, **characterized in that** the set performance criteria additionally consists of constraints relating to water depth, emissions and/or time schedules defining the arrival time or time windows for points on the way,

8. Method of claim 1, 2, 3, 4, 5, 6, or 7, **characterized in that** said selected performance variables consist of at least one of the predicted energy balance, the predicted fuel consumption, the predicted energy consumption of power plant, propulsion, and auxiliary devices, the predicted vessel motions, the amount and recovery of waste heat, distance, and time.

9. Method of claim 1, 2, 3, 4, 5, 6, 7, or 8, **characterized in that** said dynamic input parameters consist of information of external conditions during the operation of the ship, such as oceanographic information, like data of weather, sea currents, sea depths, sea state, ambient temperature, seawater temperature, air humidity, time of day and/or operational conditions such as, the vessel motion, floating position like trim, list and draft, propulsion system, the speed of the ship, rudder action, fuel costs, efficiency curves relating to the power and speed, emission values, the states of the vessel propulsion, auxiliary and maneuvering equipment, and/or modes of operation.

10. Method of claim 1, 2, 3, 4, 5, 6, 7, 8, or 9, **characterized by** selecting a route in step e) that minimizes the value for at least one chosen performance variable.

11. Method of claim 1, 2, 3, 4, 5, 6, 7, 8, or 9, **characterized in that** said determined route fulfills the optimization within a given tolerance if a desired value for at least one chosen performance variable is fulfilled.

12. Method of claim 3, 4, 5, 6, 7, 8, 9, 10, or 11, further **characterized by** improving the model after obtaining new measurement results before use by using self-learning algorithms in them that are able to continuously redefine the relationships between the performance variables related to the power consumption, energy balance of energy consuming devices on a ship, the fuel/power consumption, and/or vessel motions and the dynamic input parameters that the performance variables depend on, the dynamic input parameters being obtained as measurement results from sensors during the operation of the ship.

13. Method of claim 1, 2, 3, 4, 5, 6, 7, 8, 9, 10, 11, or 12, **characterized in that** the model further includes additional input parameters such as weather, sea and traffic forecasts.

14. System in a ship for route optimization, the system comprising
a) model that simulates the performance of a ship by defining one or more relationships between performance variables and dynamic input parameters that affect to the performance variable, the model having means for
--obtaining information of ship operation and measurement results from sensors during the operation of the ship, and
-- continuously updating the simulation results along with receiving new measurement results in order to find a route with better conformity with set performance criteria for the optimization result,
b) a calculation unit having means for
-- optimizing different routes with respect to one or more selected performance variables, and for
--selecting a route, the simulation result of which is optimized for the chosen performance variable, and
c) sensors with means for sending signals of measurements results to the model.

15. Computer program product run in a processor unit in a ship, constituting of a model simulating the performance of a ship, the model defining relationships between variables relating to the performance of a ship and parameters presenting dynamic input parameters that said variables depend on, and performing the steps of
- obtaining information of ship operation and measurement results from sensors during the operation of the ship for producing a set of dynamic input parameters,
- selecting one or more of said performance variables to be optimized in the model for determination of a route for the ship,
- calculating simulation results for the ship performance, whereby the dynamic input parameters to be used in the calculation are based on new measurement results and the value of said one or more selected performance variable is dependent on different routes,
- finding a route for which the simulation result of the ship performance fulfills one or more criteria set for the selected performance variable,
- continuously updating the simulation results along with receiving new input data in order to find a route with better conformity with set performance criteria for the optimization result.
